# EUROPEAN PATENT SPECIFICATION

(11) **EP 2 167 428 B1**
(45) Date of publication and mention of the grant of the patent: **14.12.2011**
(21) Application number: 08779511.8
(22) Date of filing: 09.07.2008
(51) Int. Cl.: C01F 11/38, C01F 11/42, C05C 5/04, C05C 7/02, C05D 3/02, C05C 3/00, C05G 5/00

(54) **METHOD OF PREPARATION OF GRANULATED INDUSTRIAL NITROGEN-CALCIUM FERTILIZER**
VERFAHREN FÜR DIE ZUBEREITUNG VON INDUSTRIELLEM STICKSTOFF-CALCIUM-DÜNGER IN GRANULATFORM
PROCÉDÉ DE PRÉPARATION D'UN ENGRAIS INDUSTRIEL GRANULÉ AZOTÉ ET ENRICHI EN CALCIUM

(30) Priority: 09.07.2007 SK 500062007
(43) Date of publication of application: 31.03.2010
(73) Proprietor: Duslo, A.S., 927 03 Sala (SK)
(72) Inventor: LENCSES, Ladislav, 951 32 Horna Kralova (SK); KRALIK, Milan, 841 05 Bratislava (SK); STEFANCOVA, Radka, 966 15 Banska Bela (SK); GBELSKY, Frantisek, 821 08 Bratislava (SK); KERDO, Pavol, 925 22 Velke Ulany (SK); FERENCI, Michal, 951 07 Maly Cetin (SK); PROTUS, Roman, 927 05 Sala (SK)
(74) Representative: Bachrata, Magdaléna
(86) International application number: PCT/SK2008/050011
(87) International publication number: WO 2009/008845

(56) References cited:
- EP-A- 0 310 868
- WO-A-00/02831
- WO-A-2008/118024
- GB-A- 660 390
- DATABASE WPI Week 198546 Thomson Scientific, London, GB; AN 1985-288361 XP002526883 & SU 1 154 206 A (RYABUKHA A A) 7 May 1985 (1985-05-07)
- DATABASE EPODOC EUROPEAN PATENT OFFICE, THE HAGUE, NL; 20 May 2003 (2003-05-20), TAUK M.V.; CHERKASOVA T.N.; NIKOLAEVA I.I.; GORSHKOVA N.V.; GORBUNOV L.K.; SAMSONOV JU.K.; LYSENKO E.V.: "Method of refining calcium nitrate melt or solution" XP002526882 & RU 2 228 906 C1 20 May 2004 (2004-05-20)
- DATABASE WPI Week 199507 Thomson Scientific, London, GB; AN 1995-050015 XP002526884 & SU 1 656 831 A1 (KIROVO CHEPETS CHEM COMBINE) 30 May 1994 (1994-05-30)

## Description

### Technical Field

The invention concerns granulated multi-component fertilizer containing water-soluble compounds of calcium and nitrogen, which is suitable for fertilizing agricultural crops, whereas the "greenhouse quality" is suitable first of all for drop irrigation systems and hydroponics systems, as well as a method of its preparation and use.

### Background Art

Calcium is a component part of macroelements necessary for good growth and development of crops. Calcium deficiency acts negatively on the stability of cell membranes, thereby increasing their permeability and disturbing proper crop growth. If calcium content in the plant is low, growth of the main root system is considerably delayed and in consequence, intake of water and nutrients is restricted (J. Fecenko, O. Lo 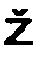 ek: V 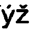 iva a hnojenie pol'n 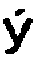 ch plodín (Nutrition and fertilization of field crops), SPU in Nitra and Duslo, a.s., 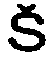 al'a, 2000). Calcium also interacts with other nutrition components, for example it stimulates potassium (K⁺) and ammonia (NH₄⁺) absorption. It has been proved by greenhouse experiments that addition of calcium has increased the growth, the plants were stronger and higher yields of wheat and barley were achieved (F. R. Troeh, L. M. Thompson: Soils and soil fertility, 6th Edition, Blackwell publishing, lowa, 2005).

Generally, calcium content in soil is relatively high, but only its small amount is available for plants. It occurs in nature most often in the form of carbonates, for example as calcite or dolomite which are, however, practically insoluble in water, and it is accessible for plants only in acidic soils.

Recently, there is on the market a wide spectrum of simple and combined fertilizers available, represented mainly by combinations with ammonium saltpeter. Large amount of granulated industrial fertilizers contains calcium mostly in the form of ground dolomite or calcite, thus only in the carbonate form. A convenient and ever more frequently used form is calcium nitrate in combination with further cations, like ammonia cation. Fertilizing with controlled distribution of nutrients requires fertilizers with exactly defined composition, and in the case of the so called watering systems and systems of "foliar fertilizing", also very low proportion of insoluble substances is required. Calcium fertilizers are very often transported and stored in the form of solutions. However, from the economical point of view, preferable fertilizers are granulated ones, which are applied directly, either in solid form or as their solutions. Granulated fertilizers must have appropriate properties from the point of view of mechanical strength and weather resistance, especially moisture resistance. Properties of single component fertilizers can be improved by addition of further components, with which they form more stable phases.

Granulation in the original conception belongs to processes of forming larger particles - granules, of powder materials (see for example Perry's Chemical Engineers' Handbook; 7th ed. McGraw Hill, 1997). In the course of granulation, besides powder material, there is often added an auxiliary agent, very often water, which helps in "particle agglomeration" of the powder material. In broader conception, processes, in which one starts with suspension or melt and in the course of granulation crystal nuclei are generated by nucleation, which are subsequently formed into agglomerates constituting the granules, are also considered to belong to granulation processes. The shape and size of granules is affected by the operation of the granulation device, and therefore, one may denote this process as initialized crystallization with controlled size of crystals and agglomerates.

According to BP 392531 (1933), calcium nitrate is prepared by evaporation to sandy paste containing 90 - 95 weight % of calcium nitrate and subsequent granulation. In this way flaky granules with dusty character are prepared. Calcium nitrate can be prepared by crystallization of acidic nitrate-phosphate solution by cooling and washing the crystals with a solution of ammonia nitrate (RU 2240284, 2003).

In the literature (Gmelins Handbuch der Anorganischen Chemie, System Number 28, Kalzium; R. Flatt, P. Fritz: "Contribution à l'étude du système quinaire (Contribution to the study of a five-component system) at 25 °C: Ca²⁺-NH₄⁺-H⁺-NO₃⁻-PO₄³⁻-H₂O, Les systèmes ternaires limites (Limits of ternary systems) Ca²⁺-H⁺-NO₃⁻-H₂O, NH₄⁺-H⁺-NO₃⁻-H₂O and Ca²⁺-NH₄⁺-NO₃⁻-H₂O at 25 °C" Helvetica Chimica Acta, Volumen XXXIII, Fasciculus VII, No 260 (1950); P. I. Procenko, O. N. Razumovskaja, N. A. Brykova: "Spravo 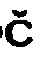 nik po rostvorimosti nitritnych i nitrathych solevych sistem (Guidebook of solubility of nitrite and nitrate salt systems)", Izdatl'stvo (Publisher) Chimija, Leningrad, 1971), there are described various mixed salts of Ca(NO₃)₂ with NH₄NO₃. In the four-component system Ca²⁺-NH₄⁺-H⁺-NO₃⁻-H₂O, there are at 25 °C observed 9 different solid and stable phases containing Ca²⁺ and NH₄⁺. By crystallization, 3 stable salts have been obtained with the following composition: NH₄NO₃·Ca(NO₃)₂·3H₂O, NH₄NO₃·5Ca(NO₃)₂·10H₂O and NH₄NO₃·αCa(NO₃)₂, the saturated solution of which is metastable at 25 °C. The opinion on the stability of binary salt Ca(NO₃)₂-NH₄NO₃·2H₂O in the literature is not consistent.

The above stable phases are prerequisite for preparation of stable fertilizers of the type M²⁺ₓM⁺_{y}(NO₃⁻)_{(2x+y)}·zH₂O, where M²⁺ is calcium cation and M⁺ is ammonia cation or an alkali metal cation. Despite the fact that compounds of the type M²⁺ₓM⁺_{y}(NO₃⁻)_{(x/2+y)}·zH₂O form stable phases, the existence of metastable states of supersaturated solutions, which are able to exist as viscous liquids even for several weeks, is an important fact in practise To accelerate the process of crystallization, most often crystal nuclei are added.

Production of granulated calcium-ammonia nitrate using a granulation procedure with an overcooled melt, which is mixed with a cooled powder product, is described in the publication Schneider et al.; Výroba průmyslovẏch hnojiv (Production of industrial fertilizers), SNTL, Praha (1959). Patents of the firm NITRATOS DE PORTUGAL SARL (DE1935893, 1970, FR 1597994, 1970, NL 6814573, 1968) describe one- or two-shaft granulators with paddles or spindle granulators, as well as a method of granulation of calcium nitrate alone or in a mixture with other fertilizers. The procedure allows preparation of calcium nitrate containing admixtures according to the type of raw material used. Novikova et al. (SU 1212949, 1986) describes the procedure of crystallization of calcium nitrate melt which consists of admixture of ammonia nitrate to the melt of calcium nitrate, heating such a melt and subsequent cooling it. For the purpose of increasing the crystalline product yield, preheating of the melt to 102 - 110 °C, admixture of the recycled material at this temperature, and cooling of the obtained melt to a room temperature is recommended. Ammonia nitrate is added in the amount of 1.5 - 2 weight % and the recycled material in the amount of 0.4 - 0.6 weight %, The procedure of calcium-ammonia nitrate production according to the patient of Navrocki et al. (WO2006031139 (PL20040370131; 20040916) (2006)) is based on decomposition of calcite with nitric acid and adjusting the ratio of ammonia to calcium cation to N-NH₄ : CaO = 0.6 : 27.0. Subsequently, the solution is evaporated and cooled, whereby crystal nuclei are formed. Microelements Cu, Fe, Mn, Zn are added in the form of biodegradable chelates, whereby simultaneously crystallization starts and solid product originates in the form of flakes. The above procedures are not enough economical and the form of flakes in not suitable for storage and transport.

According to WO 2004/039722 A1 (Isaksen et al. for Norsk hydro, 2004), calcium-ammonia nitrate is prepared from overcooled melt XN, thickened to the content of 50 - 99.8 weight % of XN, where X is one or more cations of the series Ca, Mg, Na and K, and N represents nitrate. Preferred concentration of XN is 70 - 99.5 weight %. The melt is overcooled and maintained at this temperature or under the temperature of point of crystallization. Powder of the solid XN phase is added to it (melt inoculation). Then the melt is shaped and cooling follows. Solidification i. e. formation of solid particles starts within 70 seconds. For the particles solidification, a band is used which is cooled with air, water, oil or other medium. A disadvantage of this procedure is the exigency of technological devices and considerably lower productivity compared with granulation procedures.

Rabie et al. (US 7,029,504, 2006, WO01/83374 A3, 2001) describe the procedure of fluid granulation by spraying the melt into the bed of fluidization granulator, where the bed is maintained in uplift by air, adjusted to relative humidity lower than 30 % (at 40 °C), and maintained at a temperature of 60 to 100 °C, whereby granules of calcium saltpeter are formed, which are then cooled in a further fluidization device to a temperature of 50 - 60 °C, and a part of cooled granules is recycled into the bed of fluidization granulator as nuclei particles. The disadvantage of this and further procedures based on fluidization is greater complexity than in the case of granulation in a mechanical granulator.

The firm UHDE (FL 221e/2000 04/2006 DO/HV) describes the procedure of BASF for preparation of calcium-ammonia nitrate by decomposition of calcite with nitric acid, adjusting the composition by ammonia nitrate, evaporation and granulation in a mechanical granulator, where as a consequence of insufficient removal of impurities, the product has increased colouring.

None of the described procedures allows economically effective preparation of high-grade calcium nitrate from a raw material containing also undesirable cations, like iron, manganese. Compounds of these elements are readily soluble in nitric acid, which is used in the first step of the preparation.

Typical parameters of a high-grade solid calcium-ammonia nitrate are the content of insoluble residue less than 0.1 weight %, and the content of transition metals, like iron, manganese, lead, less than 100 ppm; of high quality: less than 20 ppm.

Solution of the problem of economical production of a stable calcium-nitrogen fertilizer with water-soluble components and very low insoluble fraction, thanks to which such fertilizer is suitable for watering fertilizing, foliar fertilizing or possibly for hydroponics, is the aim of the present invention.

### Disclosure of Invention

Present invention provides a method of preparation of granulated industrial nitrogen-calcium fertilizer of high purity by decomposition of a calcium containing raw material, for example limestone, calcite, dolomite or chalk, by nitric acid and processing the obtained melt. The nature of the invention consists in that by the action of a basic agent at pH of 6 to 10 and at a temperature of 65 to 120 °C undesirable cations are precipitated from the reaction mixture, resulting from decomposition of mineral salts of calcium cations by nitric acid, they are separated, in the obtained solution the ratio Ca²⁺ : NH₄⁺ is adjusted to 4.5 to 9.4 by adding aqueous solution of nitric acid and gaseous and/or liquid ammonia and/or ammonia nitrate. The solution is thickened up, overheated solution having a temperature of 100 to 170 °C is injected into a granulator, into which powder phase is added, and the granulation is carried out at a temperature of 40 to 135 °C. Temperature of the resulting granulate is adjusted not to exceed 110 °C, wherein, after separation from the appropriate fraction of the granulated fertilizer and subsequent milling a cooled recycled material is returned into the granulator.

Decomposition of mineral salts of calcium cations is preferably performed in a cylindrical reactor, into which calcite or dolomite in pieces is added from above, nitric acid, preferably aqueous solution of nitric acid containing 10 to 80 weight % of HNO₃, even more preferably 40 to 60 weight % of HNO₃, is supplied from beneath, and solution of calcium nitrate together with unreacted nitric acid and fine solid particles are drained from the upper part of the reactor. After decomposition, the suspension is left to settle or the whole of it is saturated with gaseous ammonia to pH of maximum 10. Oxides and hydroxy-oxides of magnesium, iron, manganese, and possibly of further metals are precipitated at such pH.

It is important to perform the precipitation at a temperature of at least 50 °C, because at a lower temperature gel-like precipitates are formed which are hardly filterable. However, it is preferred to perform precipitation of undesirable cations at a pH of 6.5 to 8.5 and at a temperature of 65 to 90 °C. A suitable basic agent is gaseous ammonia and/or aqueous solution of ammonia and/or solid and/or aqueous solution of alkali hydroxide and/or calcium hydroxide.

If the raw material is too much polluted with humic substances, it is preferred to add to the reaction mixture, resulting from the decomposition of mineral salts of calcium cations by nitric acid, aqueous solution of hydrogen peroxide in an amount necessary for oxidizing possibly present cations of manganese and iron to a higher oxidation degree. Hydrogen peroxide ensures oxidation of humic substances and, simultaneously, oxidizes the cations to a higher oxidation degree, thus allowing their better precipitation. The resulting precipitate and possibly not decomposed residues are separated by filtration, vacuum filtration, centrifugation or decantation.

Composition adjustment to a value in atomic formulation Ca²⁺ : NH₄⁺ equal to 4.5 to 9.4 can be performed also with ammonia nitrate or ammonia carbonate and nitric acid, possibly with their mixtures and combination with gaseous or liquid ammonia. The resulting pH of so treated solution should be near 7, preferably 5.5 to 6.5.

Solution with appropriate ratio of Ca²⁺ : NH₄⁺ is evaporated so as to contain ca. 77 % of calcium nitrate and ca 7 % of ammonia nitrate. Such overheated solution having a temperature over the temperature of crystallization (120 to 160 °C), is injected into the granulator, preferably with mechanical stirring, into which is simultaneously fed recycled material consisting of the powder phase of the product, preferably powder phase having the composition close to that of the final product, or low-dimensional phase from product sorting, ground to the particle size of maximum 1 mm, and/or ammonia nitrate and/or calcium sulfate. Granulation is performed at a temperature of 50 to 90 °C, the granulate temperature is adjusted (lowered) to a value not exceeding 80 °C, preferably to a value not exceeding 50 °C.

Depending on the solution temperature, temperature of the added powder phase and temperature in a granulator, granules with dimensions of 0.5 to 6 mm are formed, mechanical properties of which - especially the strength - depend also on the temperature and relative humidity of the gaseous medium, used for the granulate processing (temperature lowering). Air or combination of gases consisting of nitrogen, oxygen, carbon dioxide, helium, argon and possibly other gases, which do not react with the fertilizer components, may be used as gaseous medium. It is preferred, if the temperature of such gas-steam mixture does not exceed 40 °C and the content of water in the form of water vapor does not exceed the value corresponding to 30 % relative humidity.

In this way, calcium-ammonia fertilizer can be prepared containing ca 77 % of calcium nitrate. Powder diffraction analysis has confirmed that the dominant phase is 5Ca(NO₃)₂.NH₄NO₃.10H₂O.

The presence of potassium and magnesium cations in an amount not over 8 weight % has no negative influence on the required mechanical properties, particularly on the point strength over 50 N.

If the raw materials contains no heavy metals, it is preferred to process the precipitate to a fertilizer, namely by combination with ammonia nitrate, ammonia sulfate, with zeolites, possibly with further components, according to requirements of the local market.

Further data, which do not limit the scope of the invention, as well as further advantages become obvious from the examples.

### Examples of embodiments

### Example 1 - comparative

### Preparation of the reaction mixture of calcium nitrate by calcite decomposition

10 kg/h of calcite in pieces (10 - 25 mm fraction) with average content of 92 - 98 weight % of calcium carbonate and ca 18 kg/h of concentrated nitric acid were continually fed into a cylindrical flow reactor with the volume of ca. 3.5 dm³. Suspension containing 0.1 to 3 weight % of free nitric acid was flowing out of the reactor. Within one hour 24 kg of the reaction mixture in the form of suspension of solid not reacted particles in the solution of calcium nitrate and free nitric acid with the content of 1 weight % was obtained. The reaction mixture was drained to a sedimentation tank, where it was cooled to ca. 30 °C, and a part of not dissolved substances was separated.

Subsequently, concentrated ammonia solution (80 g of 25% NH₃ solution) was added to the mixture (6 kg containing 1 % of HNO₃) while stirring, until pH of 7 was achieved.

Suspension of hydrated oxo- and hydroxy- compounds of magnesium, iron, manganese, hydrated silicon dioxide and further substances, which remained as the not reacted residuum after the decomposition of the calcium raw material with nitric acid, was obtained with gel-like character of solid substances which practically could not be separated from the liquid phase. Consequently, further processing and preparation of calcium-ammonia fertilizer having the content of insoluble substances less than 0.1 weight % and the content of transition metals less than 100 ppm was not possible.

### Example 2

### Suitable conditions for preparation of filterable precipitate and unsuitable conditions for granulation

Reaction mixture (6 kg) prepared by calcite decomposition using similar procedure as in Example 1, containing 3 weight % of HNO₃, was heated to 65 °C and 55 g of gaseous ammonia were added to it with stirring, until pH value of 7.5 was achieved, while the temperature raised up to 90 °C. The obtained suspension was separated by filtration through Büchner funnel using filtration paper 390 (blue ribbon). By means of chemical analysis of the separated precipitate it was observed that it contained mainly magnesium hydroxide, but also compounds of iron and manganese and silicates were found.

To the obtained clear aqueous solution of calcium nitrate such amount of nitric acid and ammonia was added that the ratio of calcium to ammonia cation in molar representation Ca²⁺ : NH₄⁺ = 5.4 was achieved. The solution treated in this way contained 55.2 % of calcium nitrate and 4.93 % of ammonia nitrate.

Subsequently, the solution was evaporated so that the content of calcium nitrate increased to ca 77 % and the content of ammonia nitrate increased to ca 6.9 %. For such composition the corresponding crystallization temperature is ca 95 °C. This solution having the temperature of 85 °C was injected into a batch paddle granulator together with powder calcium-ammonia nitrate in the ratio of 1:2, wherein this powder had the temperature of 30 °C. Clotted agglomerates of various shapes and size of 1 to 50 mm were obtained.

Fertilizer prepared in this way had not the required quality as a consequence of great dispersion of particle sizes and low mechanical strength.

### Example 3

### Preparation of a fertilizer having the required quality

Clear solution of calcium nitrate prepared by the procedure according to Example 2 was treated by adding nitric acid and ammonia so that the ratio of calcium to ammonia cation in molar representation Ca²⁺ : NH₄⁺ = 5.4 was achieved. The solution treated in this way was concentrated by evaporation to the content of calcium nitrate of ca 77 % and the content of ammonia nitrate of ca 6.9 %. Such solution was injected at the temperature of 145 °C into a batch paddle granulator together with powder calcium-ammonia nitrate having the temperature of 30 °C, in the ratio of 1:2. The resulting product was subsequently treated with air having the temperature of 30 °C and relative humidity of 20 %. Spherical granules were obtained with the dimensions of 0.1 - 6 mm with dominant portion of the 1 - 4 mm fraction, of which production fraction with dimensions of 1 - 3 mm was separated by sieving.

The product had the following composition: 26.5 % CaO, 1.22 % Nₐₘₘₒₙᵢᵤₘ a 15.8 % Nₜₒₜₐₗ and the point strength of 61.3 N.

### Examples 4 - 14

Using similar procedure as in Example 1 reaction mixture was prepared by decomposition of calcium raw material by nitric acid. From the reaction mixture prepared in this way 6 kg were taken and clear solutions of calcium nitrate were prepared under conditions given in Table 1, wherein filtration was performed on a pressure filter with pressure difference of 0.4 MPa.

**Table 1**

| Example | Raw material^{a} - content of CaCO₃ weight % | Content of HNO₃ weight % | Separation of particles after decomposition ^{b} | Added NH₃ g | Temperature before neutralization °C, | Temperature after neutralization °C | pH after neutralization | Speed of filtration g.min⁻¹ cm⁻² |
|---|---|---|---|---|---|---|---|---|
| 4 (Comparative) | V-94 | 1.01 | S | 85^{c} | 32 | 50 | 8 | 0.35 |
| 5 | V-94 | 2.98 | N | 55 | 65 | 90 | 7.5 | 1.20 |
| 6 | V-94 | 3.00 | N | 55 | 95 | 120 | 7.5 | 1.50 |
| 7 | V-94 | 2.98 | S | 50 | 65 | 85 | 6.5 | 0.34 |
| 8 | V-94 | 3.00 | S | 50 | 95 | 115 | 6.5 | 1.15 |
| 9 | V-94 | 3.00 | S | 60 | 75 | 115 | 8 | 1.55 |
| 10 | V-90 | 2.00 | S | 50 | 70 | 98 | 7.5 | 1.40 |
| 11 | V-91 | 2.00 | S | 45 | 70 | 96 | 6.5 | 1.10 |
| 12 | V-96 | 3.00 | N | 65 | 70 | 110 | 8.5 | 1.60 |
| 13 | D-55 | 2.50 | N | 60 | 70 | 110 | 8.5 | 1.12 |
| 14 | K-99 | 2.00 | N | 50 | 70 | 98 | 8 | 1.20 |

| | | | | | | | | |
|---|---|---|---|---|---|---|---|---|
| ^{a} V - calcite, D - dolomite, K - chalk ^{b} S - sedimentation, N - non-separated ^{c} added in the form of 25 weight % aqueous solution | | | | | | | | |

The obtained clear solutions of calcium nitrate were processed using similar procedure as in Example 3 to a fertilizer of required quality.

### Example 15

By similar procedure as in Example 1, but using calcite of 91% purity which additionally contained increased proportion of humic substances, reaction mixture in the form of turbid suspension was prepared. This reaction mixture was left to settle, liquid fraction was separated, and 0.2 vol. % of aqueous solution of hydrogen peroxide containing 50 weight % of active substance were added to the liquid fraction. Subsequently, the reaction mixture (6 kg) was heated to 70 °C and 55 g of gaseous ammonia were added with stirring until pH of 6 was achieved. Well filterable suspension was obtained formed by aqueous solution of calcium nitrate and solid particles, formed mainly by silicates and compounds of iron, manganese and magnesium. After filtration clear solution for further processing was obtained.

### Example 16

Suspension, prepared by similar procedure as in Example 3, was not filtered, but the precipitate was separated by centrifugation at 6000 r/min. Aqueous solution of calcium nitrate was decanted and processed to high-grade calcium-ammonia fertilizer using the procedure according to Example 3.

### Examples 17 - 23

### Influence of conditions of granulation

Concentrated solution of calcium nitrate and ammonia nitrate which was prepared by evaporation using the procedure according to Examples 3 to 15, was adjusted by adding nitric acid and ammonia to the ratio of calcium and ammonia cations within the range of 4.5 to 9 and evaporated to concentration suitable for performing granulation with melt temperature higher than the temperature of crystallization and with powder phase represented by ground product of unsuitable size having temperature considerably lower than the temperature of melt crystallization.

Granulate was dried by air having the temperature of 30 °C and relative humidity of 18 %. The results are given in Table 2.

**Table 2**

| Example | Ratio Ca²⁺ : NH₄⁺ before evaporation | Tempera ture of crystalliza tion after evaporation °C | Tempera ture of melt injection into the granulator °C | Ratio Ca²⁺; NH₄⁺ in the recycled material | Ratio of the recycled material to melt | Tempera ture of the recycled material °C, | Ratio Ca²⁺: NH₄⁺ in the product | Portion of the 1-4 mm fraction % | Point strength N |
|---|---|---|---|---|---|---|---|---|---|
| 18 | 4.5 | 95 | 110 | 4 | 2 | 45 | 4.2 | 37 | 63 |
| 19 | 4.5 | 95 | 160 | 4 | 4 | 35 | 4.1 | 42 | 67 |
| 20 | 7 | 106 | 125 | 4.5 | 2.5 | 55 | 5.2 | 49 | 59 |
| 21 | 7 | 106 | 160 | 5 | 5 | 48 | 5.3 | 55 | 61 |
| 22 | 9 | 112 | 128 | 4 | 2,2 | 27 | 5.6 | 34 | 68 |
| 23 | 9 | 112 | 170 | 4.5 | 4.5 | 35 | 5.3 | 36 | 66 |

### Examples 24 - 29

### Influence of parameters of medium used for granulate processing

Concentrated solution of calcium nitrate and ammonia nitrate which was prepared using the procedure according to Examples 3 to 15, was adjusted by adding nitric acid and ammonia to the ratio of calcium and ammonia cations within the range of 4.5 to 9 and evaporated to concentration suitable for performing granulation with melt temperature higher than the temperature of crystallization. Powder phase of the composition Ca²⁺ : NH₄⁺ = 5.5 and with temperature of 47 °C was added to the granulator.

Granulate was treated by air of various temperatures and relative humidity. The results are given in Table 3.

**Table 3**

| Example | Ratio Ca²⁺ : NH₄⁺ before evaporation | Tempera ture of crystalliza tion after evaporation °C | Tempera ture of melt injection into the granulator °C | Tempera ture of drying air °C | Relative humidity % | Portion of the 1-4 mm fraction % | Point strength N |
|---|---|---|---|---|---|---|---|
| 24 | 4.5 | 95 | 160 | 10 | 17 | 39 | 61 |
| 25 | 4.5 | 95 | 110 | 40 | 34 | 22 | 42 |
| 26 | 4.5 | 95 | 160 | 40 | 30 | 34 | 51 |
| 27 | 9 | 112 | 160 | 40 | 21 | 46 | 62 |
| 28 | 9 | 112 | 125 | 20 | 45 | 21 | 28 |
| 29 | 9 | 112 | 160 | 40 | 30 | 43 | 52 |

It follows from the above table that suitable granules (size of 1 - 4 mm, point strength higher than 50 N) were obtained when processing granulate with medium of a temperature of maximum 40 °C and of maximum relative humidity of 30 %.

### Example 30

### Utilization of the precipitate from separation of suspension of neutralized reaction mixture obtained by decomposition of calcium raw material with nitric acid

Variant 1: 100 g of ground ammonia sulfate was added to 100 g of the precipitate prepared according to Example 9. The obtained mixture was homogenized by stirring and applied onto a steel plate. After 24 hours the suspension solidified and the product of the composition of 14.85 % N, 11.5 % S, 10.2 % CaO and 1.8 % MgO was obtained.

Variant 2: 100 g of ground ammonia sulfate and 60 g of natural zeolite were added to 100 g of the precipitate prepared according to Example 9. The obtained suspension was homogenized by stirring and applied onto a steel plate. After 30 minutes the suspension solidified and calcium-magnesium fertilizer which, besides these nutrients, contributes also to increasing porosity of clay soils and increasing ion-exchange capacity of the soil was obtained.

## Claims

1. Method of preparation of granulated industrial nitrogen-calcium fertilizer by decomposition of mineral salts of calcium cations with nitric acid and processing the obtained melt,
**characterized in that**
from the reaction mixture resulting from decomposition of mineral salts of calcium cations with nitric acid, by the action of a basic agent at pH of 6 to 10 and at a temperature of 65 to 120 °C undesirable cations are precipitated, they are separated, in the obtained solution the ratio Ca²⁺ : NH₄⁺ is adjusted to 4.5 to 9.4 by adding aqueous solution of nitric acid and gaseous and/or liquid ammonia and/or ammonia nitrate, the solution is thickened, overheated solution having a temperature of 100 to 170 °C is injected into a granulator, powder phase is added, it is granulated at a temperature of 40 to 135 °C, and adjusted to a temperature of the resulting granulate not exceeding 110 °C, the granulated material is screened, the appropriate fraction of the granulated fertilizer is separated, oversized fraction is grind and together with the undersized fraction is cooled and returned into the granulator.

2. Method according to claim 1,
**characterized in that**
precipitation of undesirable cations is performed at a pH of 6.5 to 8.5 and at a temperature of 65 to 90 °C.

3. Method according to claim 1,
**characterized in that**
the basic agent is gaseous ammonia and/or aqueous solution of ammonia and/or solid and/or aqueous solution of alkali hydroxide and/or calcium hydroxide.

4. Method according to claim 1,
**characterized in that**
to the reaction mixture, resulting from decomposition of mineral salts of calcium cations by nitric acid, aqueous solution of hydrogen peroxide in an amount necessary for oxidizing possibly present cations of manganese and iron to a higher oxidation degree is added.

5. Method according to claim 1,
**characterized in that**
the precipitate and possibly not decomposed residues are separated by filtration, vacuum filtration, centrifugation or decantation.

6. Method according to claim 1,
**characterized in that**
decomposition of mineral salts of calcium cations is performed by aqueous solution of nitric acid containing 10 to 80 weight % of HNO₃, preferably 40 to 60 weight % of HNO₃.

7. Method according to claim 1,
**characterized in that**
overheated solution is injected into a mechanically stirred granulator.

8. Method according to claim 1,
**characterized in that**
the powder phase is a phase of the composition close to that of the resulting product.

9. Method according to claim 1,
**characterized in that**
the powder phase is a low-size phase from the product sorting, ground to the particle size of maximum one mm, and/or ammonia nitrate and/or calcium sulfate.

10. Method according to claim 1,
**characterized in that**
the temperature of the solution injected into the granulator is 120 to 160 °C.

11. Method according to claim 1,
**characterized in that**
the granulation is performed at a temperature of 50 to 90 °C.

12. Method according to claim 1,
**characterized in that**
the granulate is processed to a temperature not exceeding 80 °C, preferably to a value not exceeding 50 °C.

13. Method according to claim 12,
**characterized in that**
for the granulate processing air of a temperature of maximum 40 °C, preferably of maximum 15 °C, and with water content corresponding to relative humidity of maximum 30 %, preferably of maximum 20 %, is used.

14. Method according to claim 12,
**characterized in that**
for the granulate processing a mixture of gases consisting of oxygen, nitrogen, carbon dioxide, argon and helium is used in combination of contents of the gases of 0.001 to 99.999 mole %, wherein the temperature of the mixture does not exceed 40 °C, preferably at the most 15 °C, and its water content corresponds to a relative humidity of maximum 30 %, preferably of maximum 20 %.

## Patentansprüche

1. Verfahren zur Herstellung vom granulierten mineralischen stickstoff-kalkhaltigen Dünger durch Zersetzung von Mineralsalzen der Kalziumkationen mithilfe der Salpetersäure und durch Bearbeitung der angefallenen Schmelze, ***dadurch gekennzeichnet*, dass** die unerwünschten Kationen durch Einwirkung eines basischen Mittels bei einem pH-Wert von 6 bis 10 und bei einer Temperatur von 65 °C bis 120 °C aus dem nach der Zersetzung von Mineralsalzen der Kalziumkationen mithilfe der Salpetersäure erhaltenen Reaktionsgemisch ausgefällt werden, anschließend sie abgetrennt werden, in der erhaltenen Lösung das Verhältnis Ca²⁺ : NH₄⁺ durch Zugabe einer wässrigen Lösung der Salpetersäure und des gasförmigen und/oder flüssigen Ammoniak und/oder des Ammoniumnitrats auf einen Wert aus dem Bereich von 4,5 bis 9,4 eingestellt wird, die Lösung eingeengt wird, die Lösung auf eine Temperatur von 100 °C bis 170 °C erhitzt wird, solche überhitzte Lösung in einen Granulator eingespritzt wird, eine pulverförmige Phase zugegeben wird, die Granulierung bei einer Temperatur von 40 °C bis 135 °C durchführt wird und die Temperatur des entstehenden Granulats auf eine den Wert von 110 °C nicht überschreitende Temperatur eingestellt wird, das Granulat gesiebt wird und die entsprechende Fraktion des granulierten Düngers abgetrennt wird, das Siebgrobe zerkleinert wird und zusammen mit Siebfeinem abgekühlt und zurück in den Granulator geführt werden.

2. Verfahren zur Herstellung nach Anspruch 1, ***dadurch gekennzeichnet,* dass** die Fällung der unerwünschten Kationen bei einem pH-Wert von 6,5 bis 8,5 und bei einer Temperatur von 65 °C bis 90 °C durchgeführt wird.

3. Verfahren zur Herstellung nach Anspruch 1, ***dadurch gekennzeichnet,* dass** das basische Mittel das gasförmige Ammoniak und/oder wässrige Ammoniaklösung und/oder festes Alkalihydroxid und/oder wässrige Lösung eines Alkalihydroxids und/oder wässrige Lösung eines Kalziumhydroxids.

4. Verfahren zur Herstellung nach Anspruch 1, ***dadurch gekennzeichnet,* dass** zu dem nach der Zersetzung von Mineralsalzen der Kalziumkationen mithilfe der Salpetersäure erhaltenen Reaktionsgemisch eine wässrige Wasserstoffperoxidlösung in einer für die Oxidation der Mangan- und Eisenkationen auf eine höhere Oxidationsstufe notwendigen Menge zugegeben wird.

5. Verfahren zur Herstellung nach Anspruch 1, ***dadurch gekennzeichnet,* dass** der Niederschlag und eventuelle nicht zersetzte Reste durch Filtration, Vakuumfiltration, Zentrifugieren oder Dekantieren abgetrennt werden.

6. Verfahren zur Herstellung nach Anspruch 1, ***dadurch gekennzeichnet,* dass** die Zersetzung von Mineralsalzen der Kalziumkationen mithilfe einer wässrigen Lösung der Salpetersäure, beinhaltend vorzugsweise von 10 bis 80 Gew.-% HNO₃, besonders bevorzugt von 40 bis 60 Gew.-% HNO₃, durchgeführt wird.

7. Verfahren zur Herstellung nach Anspruch 1, ***dadurch gekennzeichnet*, dass** die überhitzte Lösung in einen mechanisch gemischten Granulator eingespritzt wird.

8. Verfahren zur Herstellung nach Anspruch 1, ***dadurch gekennzeichnet,* dass** die pulverförmige Phase eine dem Endprodukt nahe Phase darstellt.

9. Verfahren zur Herstellung nach Anspruch 1, ***dadurch gekennzeichnet*, dass** die pulverförmige Phase eine niedermassige Phase aus der Produktsiebung, die auf eine Partikelgröße maximal ein Millimeter zermahlt wurde, und/oder Ammoniumnitrat und/oder Kaliumnitrat und/oder Kalziumsulfat ist.

10. Verfahren zur Herstellung nach Anspruch 1, ***dadurch gekennzeichnet*, dass** die Temperatur der in den Granulator eingespritzten Lösung einen Wert von 120 °C bis 160 °C beträgt.

11. Verfahren zur Herstellung nach Anspruch 1, ***dadurch gekennzeichnet*, dass** die Granulierung bei einer Temperatur von 50 °C bis 90 °C durchgeführt wird.

12. Verfahren zur Herstellung nach Anspruch 1, ***dadurch gekennzeichnet*, dass** die Granulierung bei einer Temperatur, die vorzugsweise einen Wert von 80 °C, besonders bevorzugt 50 °C nicht überschreitet, durchgeführt wird.

13. Verfahren zur Herstellung nach Anspruch 12, ***dadurch gekennzeichnet*, dass** für die Granulierung Luft mit einer Temperatur vorzugsweise höchstens 40 °C, besonders bevorzugt höchstens 15 °C und mit einem Wassergehalt, der vorzugsweise einer relativen Feuchtigkeit höchstens 30 %, besonders bevorzugt höchstens 20 % entspricht, verwendet wird.

14. Verfahren zur Herstellung nach Anspruch 12, ***dadurch gekennzeichnet*, dass** für das Granulierungsverfahren eine Gasmischung, beinhaltend Sauerstoff, Stickstoff, Kohlendioxid, Argon und Helium in einer Kombination der Gasgehalte von 0,001 bis 99,999 Mol.-%, angewendet wird, wobei die Temperatur der Mischung vorzugsweise den Wert 40 °C, besonders bevorzugt 15 °C, und einem Wassergehalt, der vorzugsweise einer relativen Feuchtigkeit höchstens 30 %, besonders bevorzugt höchstens 20 % entspricht, nicht überschreitet.

## Revendications

1. Procédé pour préparer d'un engrais azoté-calcique granulé par la décomposition des sels minéraux de cations de calcium par l'action de l'acide nitrique et par le traitement de la matière en fusion, **caractérisé en ce que** les cations indésirables contenus dans le mélange réactionnel après la décomposition des sels minéraux par l'action de l'acide nitrique sont précipités en utilisant un agent basique dans un pH de 6 à 10 et à la température de 65 °C à 120 °C, et ensuite séparé, cependant le rapport de Ca²⁺ : NH₄⁺ dans la solution ainsi obtenue est ajusté à une valeur entre 4.5 et 9.4, la solution est concentrée, chauffée à la température de 100 °C à 170 °C, la solution surchauffée est injectée dans le granulateur en ajoutant une phase poudre et la granulation est réalisée à la température entre 40 °C et 135 °C, la température du granulat formé étant ajustée a la valeur inférieure à 110 °C, le granulat est tamisé, la fraction d'engrais granulé est séparée, refus du tamis est broyée et mélangée avec le tamisant, le mélange étant refroidi et retourné dans le granulateur.

2. Procédé selon la revendication 1, **caractérisé en ce que** la précipitation des cations indésirables est réalisée dans des conditions de pH 6,5 à 8,5 et de température entre 65 °C et 90 °C.

3. Procédé selon la revendication 1, **caractérisé en ce que** l'agent basique utilisé est l'ammoniaque en phase gazeuse et/ou dans une solution aqueuse d'ammoniaque et/ou une solution solide et/ou aqueuse d'hydroxyde de métal alcalin et/ou d'hydroxyde de calcium.

4. Procédé selon la revendication 1, **caractérisé par le fait qu'**au mélange réactionnel obtenu par la décomposition des sels minéraux de cations de calcium une solution aqueuse de peroxyde d'hydrogène est ajoutée en quantité nécessaire pour une oxydation de cations de manganèse et fer à un degré d'oxydation plus élevé.

5. Procédé selon la revendication 1, **caractérisé en ce que** le précipité et les résidus qui possiblement n'ont pas été décomposés, sont séparés par filtration, centrifugation ou décantation.

6. Procédé selon la revendication 1, **caractérisé en ce que** la décomposition des sels minéraux de cations de calcium est réalisée avec une solution d'acide nitrique contenant entre 10 et 80 % en masse de HNO₃, de préférence entre 40 et 60 % en masse de HNO₃.

7. Procédé selon la revendication 1, **caractérisé en ce que** la solution surchauffée est injectée dans un granulateur avec agitation mécanique.

8. Procédé selon la revendication 1, **caractérisé en ce que** la phase poudre est un mélange d'une composition proche de celle du produit final.

9. Procédé selon la revendication 1, **caractérisé en ce que** la phase poudre est une phase contenant des particules de petite taille provenant du tamisage de produit, qui a été broyée jusqu'à une dimension de particules égale ou inférieure à 1 mm, et/ou nitrate d'ammonium, et/ou nitrate de potassium, et/ou sulfate de calcium.

10. Procédé selon la revendication 1, **caractérisé en ce que** la température de la solution injectée dans le granulateur est de 120 °C à 160 °C.

11. Procédé selon la revendication 1, **caractérisé en ce que** la granulation est réalisée à la température entre 50 °C et 90 °C.

12. Procédé selon la revendication 1, **caractérisé en ce que** la granulation est réalisée à la température inférieure à 80 °C, de préférence à 50 °C.

13. Procédé selon la revendication 12, **caractérisé par le fait que** pour la granulation on utilise l'air d'une température ne dépassant pas 40 °C, de préférence 15 °C, et avec contenu d'eau correspondant à l'humidité relative maximum de 30 %, de préférence de 20 %.

14. Procédé selon la revendication 12, **caractérisé en ce que** pour la procédure de granulation on utilise un mélange des gazes contenant oxygène, dioxyde de carbone, argon, et hélium an combinaison avec le contenu des gazes entre 0,001 et 99,999 % mol, cependant la température du mélange est égale ou inférieure à 40 °C, de préférence 15 °C et le contenu d'eau correspond à l'humidité relative maximum de 30 %, de préférence de 20 %.
